# EUROPÄISCHE PATENTSCHRIFT

(11) **EP 4 114 712 B1**
(45) Veröffentlichungstag und Bekanntmachung des Hinweises auf die Patenterteilung: **15.10.2025**
(21) Anmeldenummer: 21707660.3
(22) Anmeldetag: 22.02.2021
(51) Int. Cl.: B62D 15/02, B60W 30/06

(54) **VERFAHREN ZUM BETREIBEN EINES FAHRZEUGS, PARKASSISTENZSYSTEM UND FAHRZEUG**
METHOD FOR OPERATING A VEHICLE, PARKING ASSISTANCE SYSTEM AND VEHICLE
PROCÉDÉ DE FONCTIONNEMENT D'UN VÉHICULE, SYSTÈME D'AIDE AU STATIONNEMENT ET VÉHICULE

(30) Priorität: 02.03.2020 DE 102020105434
(43) Veröffentlichungstag der Anmeldung: 11.01.2023
(73) Patentinhaber: Valeo Schalter und Sensoren GmbH, 74321 Bietigheim-Bissingen (DE)
(72) Erfinder: BHADGAONKAR, Sharad, Shivajirao, 74321 Bietigheim-Bissingen (DE); PRINZHAUSEN, Stefanie, 74321 Bietigheim-Bissingen (DE); LANGER, Cedric, 74321 Bietigheim-Bissingen (DE); GAIM, Wolfgang, 74321 Bietigheim-Bissingen (DE)
(74) Vertreter: Jauregui Urbahn, Kristian
(86) Internationale Anmeldenummer: PCT/EP2021/054267
(87) Internationale Veröffentlichungsnummer: WO 2021/175631

(56) Entgegenhaltungen:
- EP-A1- 3 401 190
- DE-A1- 102018 117 718

## Beschreibung

Die vorliegende Erfindung betrifft ein Verfahren zum Betreiben eines Fahrzeugs, ein Parkassistenzsystem und ein Fahrzeug.

Es sind Parkassistenzsysteme für Fahrzeuge bekannt, die in einem Trainingsmodus durch einen Benutzer dazu trainiert werden können, eine bestimmte Trajektorie mit dem Fahrzeug nachzufahren, beispielsweise von einer Hofeinfahrt in eine Garage. Hierzu wird die manuell von dem Benutzer gefahrene Trajektorie aufgezeichnet. Bei einem späteren Nachfahren führt das Parkassistenzsystem die von dem Benutzer bei dem Trainieren vorgenommenen Steuerungsaktionen automatisch durch, wodurch das Fahrzeug die Trajektorie nachfährt. DE 10 2018 117718 A1 beschreibt ein Verfahren zum Betreiben eines Fahrzeugs mittels eines Parkassistenzsystems, welches in einem Nachfahrmodus zum Fahren des Fahrzeugs entlang einer trainierten Trajektorie oder zum Veranlassen des Fahrens eingerichtet ist.

DE 10 2017 002 731 A1 beschreibt ein Verfahren zum Betrieb eines Kraftfahrzeugs. Das Verfahren weist das manuelle Führen des Kraftfahrzeugs entlang einer ersten Trajektorie während eines ersten Parkvorgangs, insbesondere eines Einparkvorgangs, auf. Die erste Trajektorie wird während des ersten Parkvorgangs erfasst. Zudem wird eine zweite Trajektorie durch Anwenden eines Glättungsverfahrens auf die erste Trajektorie und/oder durch Anpassen der ersten Trajektorie an während des ersten Parkvorgangs erfasste Umgebungsdaten, insbesondere an aus den erfassten Umgebungsdaten ermittelte Hindernisse und/oder hindernisfreie Bereiche, bestimmt.

Aus technischen Gründen kann ein sehr hoher oder auch maximaler Lenkeinschlag, den der Nutzer beim Trainieren der Trajektorie ohne Probleme einschlagen kann, in dem Nachfahrmodus nicht erreichbar sein. Daher ist vorgesehen, dass das Parkassistenzsystem das Trainieren der Trajektorie unterbricht, wenn der Nutzer einen oberen Grenzwert für den Lenkeinschlag überschreitet. Die Trajektorie wird dann nicht gespeichert und steht nicht zum Nachfahren zur Verfügung. Wenn das Parkassistenzsystem die Trajektorie dennoch trainiert und abspeichert, kann sich das Problem ergeben, dass das Fahrzeug bei dem Nachfahren der trainierten Trajektorie von dieser abkommt, was bestenfalls zu einem Abbruch des Nachfahrmanövers, schlimmstenfalls zu einer Kollision des Fahrzeugs mit einem Hindernis führen kann.

Vor diesem Hintergrund besteht eine Aufgabe der vorliegenden Erfindung darin, den Betrieb eines Fahrzeugs zu verbessern.

Gemäß einem ersten Aspekt wird ein Verfahren zum Betreiben eines Fahrzeugs mittels eines Parkassistenzsystems, welches in einem Nachfahrmodus zum Fahren des Fahrzeugs entlang einer trainierten Trajektorie oder zum Veranlassen des Fahrens des Fahrzeugs eingerichtet ist, vorgeschlagen. In einem ersten Schritt a) wird die trainierte Trajektorie, die in einem Trainingsmodus, in welchem eine manuell gefahrene Trajektorie als die trainierte Trajektorie erfasst wird, erhalten. "Erhalten" meint dabei insbesondere, dass zumindest Rohmessdaten aus einer sensorischen Erfassung der Trajektorie bereitgestellt werden. Vorzugsweise wird die trainierte Trajektorie zuvor sensorisch, insbesondere mit Hilfe von zumindest einem Fahrzeugsensor, wie Ultraschallsensor und/oder Kamerasensor und/oder GPS-Sensor und/oder Radarsensor und/oder Lidarsensor und/oder Odometriesensor, erfasst. Die trainierte Trajektorie umfasst zumindest einen stark gekrümmten Teilabschnitt, dessen Krümmungsradius kleiner ist, als ein Radius, der mit dem Fahrzeug mit einem in dem Nachfahrmodus vorgegebenen größten zulässigen Lenkeinschlag erzielbar ist. In einem zweiten Schritt b) wird ein Anfangspunkt und ein Endpunkt des stark gekrümmten Teilabschnitts in der trainierten Trajektorie bestimmt. Das Bestimmen umfasst auch ein Festlegen und/oder Erfassen. In einem dritten Schritt c) wird eine Ersatztrajektorie, die einen Ersatzanfangspunkt mit einem Ersatzendpunkt verbindet, ermittelt. Der Ersatzanfangspunkt und der Ersatzendpunkt liegen jeweils auf der trainierten Trajektorie und der stark gekrümmte Teilabschnitt liegt zwischen dem Ersatzanfangspunkt und dem Ersatzendpunkt. Eine maximale Krümmung der Ersatztrajektorie weist einen Krümmungsradius auf, der mit dem im Nachfahrmodus vorgegebenen größten zulässigen oder einem dazu kleineren Lenkeinschlag erzielbar ist.

Dieses Verfahren hat den Vorteil, dass einerseits Trajektorien in einem Trainingsmodus trainierbar sind, die sehr enge Kurven umfassen, und andererseits die trainierte Trajektorie in dem Nachfahrmodus erfolgreich nachgefahren werden kann, ohne dass das Fahrzeug sich zu weit von der trainierten Trajektorie entfernt. Das Verfahren wird vorzugsweise dort eingesetzt, wo die Verkehrssituation einen von dem Nutzer beim Trainieren der Trajektorie einsetzten maximalen Lenkeinschlag nicht zwingend erfordert. Unter Lenkeinschlag oder auch Lenkwinkel wird beispielsweise ein Winkel zwischen einer Radrotationsachse eines lenkenden Rades und einer Querrichtung des Fahrzeugs oder zwischen einer Radabrollrichtung und einer Längsrichtung des Fahrzeugs verstanden.

Das Parkassistenzsystem, das auch als Fahrerassistenzsystem bezeichnet werden kann, ist insbesondere zum teilautonomen oder vollautonomen Fahren des Fahrzeugs eingerichtet.

Unter teilautonomem Fahren wird beispielsweise verstanden, dass das Parkassistenzsystem eine Lenkvorrichtung und/oder eine Fahrstufenautomatik steuert. Unter vollautonomem Fahren wird beispielsweise verstanden, dass das Parkassistenzsystem zusätzlich auch eine Antriebseinrichtung und eine Bremseinrichtung steuert. Das Parkassistenzsystem kann hardwaretechnisch und/oder softwaretechnisch implementiert sein. Bei einer hardwaretechnischen Implementierung kann das Parkassistenzsystem zum Beispiel als Computer oder als Mikroprozessor ausgebildet sein. Bei einer softwaretechnischen Implementierung kann das Parkassistenzsystem als Computerprogrammprodukt, als eine Funktion, als eine Routine, als Teil eines Programmcodes oder als ausführbares Objekt ausgebildet sein. Insbesondere kann das Parkassistenzsystem als Teil eines übergeordneten Steuerungssystems des Fahrzeugs, wie beispielsweise eine ECU (Engine Control Unit), ausgebildet sein.

Das Fahrzeug ist beispielsweise ein Personenkraftwagen oder auch ein Lastkraftwagen. Das Fahrzeug umfasst insbesondere eine Anzahl an Sensoreinheiten, die zum Erfassen des Fahrzustands des Fahrzeugs und zum Erfassen einer Umgebung des Fahrzeugs eingerichtet sind. Beispiele für derartige Sensoreinheiten des Fahrzeugs sind Bildaufnahmeeinrichtungen, wie eine Kamera, ein RADAR oder auch ein LIDAR, Ultraschallsensoren, ein Ortungssensor, Radwinkelsensoren und/oder Raddrehzahlsensoren. Die Sensoreinheiten sind jeweils zum Ausgeben eines Sensorsignals eingerichtet, beispielsweise an das Parkassistenzsystem, welches das teilautonome oder vollautonome Fahren in Abhängigkeit der erfassten Sensorsignale durchführt.

Zum Trainieren einer Trajektorie wird das Parkassistenzsystem beispielsweise durch den Nutzer in einen Trainingsmodus versetzt. In dem Trainingsmodus zeichnet das Parkassistenzsystem vorzugsweise alle Steuerungseingaben des Benutzers auf, wie beispielsweise ein Lenkwinkel, einen eingelegten Gang, eine zurückgelegte Distanz und dergleichen. Die entsprechenden Werte werden vorzugsweise in Beziehung zueinander gespeichert, so dass beispielsweise der Lenkwinkel als Funktion der Radumdrehungen vorliegt. Damit ist die trainierte Trajektorie, zumindest bei schlupffreier Fahrt, eindeutig festgelegt. Zusätzlich zu diesen Daten, die auch als Odometriedaten bezeichnet werden, werden während des Trainings vorzugsweise auch Sensorsignale von Umgebungssensoren des Fahrzeugs aufgezeichnet. Dies kann eine Orientierung des Parkassistenzsystems, insbesondere in dem Nachfahrmodus, erleichtern.

Eine Besonderheit hierbei ist, dass die Trajektorie auch dann aufgezeichnet wird, wenn dabei ein höherer Lenkwinkel verwendet wird, als in dem Nachfahrmodus erreichbar ist. Sehr hohe Lenkwinkel, beispielsweise ein Maximaleinschlag, erfordern ein sehr hohes Drehmoment. Der Nutzer kann das Drehmoment mittels des Lenkrads und dem Servomotor ohne Probleme erreichen, aber für ein Stellglied zum Steuern des Lenkwinkels beim autonomen Fahren stellt dieses eine sehr hohe Belastung dar. Um ein Risiko eines schnellen Verschlei-ßens oder vorzeitigen Ausfalls des Stellglieds gering zu halten, kann der in dem autonomen Fahrmodus erreichbare maximale Lenkwinkel daher reduziert sein, beispielsweise beträgt dieser 80% oder auch 90% des konstruktiven maximalen Lenkwinkels. Der in dem Nachfahrmodus maximal erreichbare Lenkwinkel kann nachfolgend auch als Grenz-Lenkwinkel bezeichnet werden.

Je größer der Lenkwinkel ist, umso größer ist die Krümmung der damit erzeugten Trajektorie und umso kleiner ist ein Krümmungsradius eines Krümmungskreises oder auch Schmiegekreises. Dementsprechend weist eine Trajektorie, die in dem Nachfahrmodus gefahren werden kann, eine maximale Grenz-Krümmung und einen minimalen Grenz-Krümmungsradius auf. Eine höhere Krümmung als die Grenz-Krümmung und ein kleinerer Krümmungsradius als der Grenz-Krümmungsradius ist daher nicht erreichbar.

Die trainierte Trajektorie kann auch mehrere Teilabschnitte umfassen, deren Krümmung höher als die Grenz-Krümmung ist. Die jeweilige Trajektorie, beispielsweise die trainierte Trajektorie und die Ersatztrajektorie, bezieht sich beispielsweise auf einen Referenzpunkt, insbesondere Mittelpunkt, Schwerpunkt oder Mittelpunkt der Hinterachse des Fahrzeugs. Alternativ oder zusätzlich lassen sich Trajektorien für eines oder mehrere Räder des Fahrzeugs erfassen und/oder ermitteln und/oder erhalten, und/oder eine Trajektorie für einen oder mehrere Eckpunkte einer Karosserie des Fahrzeugs.

Das Bestimmen des Anfangspunkts und des Endpunkts des stark gekrümmten Teilabschnitts kann bereits während des Aufzeichnens oder Trainierens der Trajektorie erfolgen. Beispielsweise wird ein Datenpunkt in den Odometriedaten, der zu einem Zeitpunkt korrespondiert, zu dem der Nutzer den Grenz-Lenkwinkel überschreitet oder auch wieder unterschreitet, entsprechend gekennzeichnet. Alternativ kann vorgesehen sein, erst dann, wenn der Nachfahrmodus aktiviert und die entsprechende Trajektorie ausgewählt wurde, die Krümmung der Trajektorie an jedem Punkt der Trajektorie zu analysieren und zusammenhängende Abschnitte, deren Krümmung die Grenz-Krümmung überschreitet, entsprechend zu markieren. Der erste Punkt eines solchen Abschnitts ist dann der Anfangspunkt und der letzte Punkt des Abschnitts ist der Endpunkt.

Anschließend wird für den stark gekrümmten Teilabschnitt eine Ersatztrajektorie ermittelt, deren maximale Krümmung die Grenz-Krümmung nicht überschreitet. Der Ersatzanfangspunkt und Ersatzendpunkt der Ersatztrajektorie liegen beide auf der trainierten Trajektorie und schließen den stark gekrümmten Teilabschnitt mit ein. Damit ist sichergestellt, dass die Ersatztrajektorie von der trainierten Trajektorie so wenig wie möglich abweicht und dass das Fahrzeug sich nach dem Nachfahren der Ersatztrajektorie wieder auf der trainierten Trajektorie befindet.

Bei komplexen trainierten Trajektorien, die mehrere stark gekrümmte Teilabschnitte dicht hintereinander, wie beispielsweise eine S-Kurve, aufweisen, kann vorgesehen sein, dass für einzelne der stark gekrümmten Teilabschnitte eine Ersatztrajektorie ermittelt wird, wobei ein Ersatzanfangspunkt und/oder ein Ersatzendpunkt der jeweiligen Ersatztrajektorie nicht auf der trainierten Trajektorie liegt. Die mehreren derart ermittelten Ersatztrajektorien werden anschließend zu einer Gesamt-Ersatztrajektorie verbunden, deren Anfangspunkt und Endpunkt auf der trainierten Trajektorie liegen. Die Gesamt-Ersatztrajektorie umfasst dabei nicht unbedingt den gesamten Verlauf der mehreren Ersatztrajektorien, vielmehr können diese teilweise gekürzt sein. Beispielsweise werden hierzu Übergangspunkte ermittelt, an denen von einer ersten Ersatztrajektorie auf eine zweite, nachfolgende Ersatztrajektorie übergegangen wird. Ein solcher Übergangspunkt kann zwischen dem Ersatzanfangspunkt und dem Ersatzendpunkt einer jeweiligen Ersatztrajektorie liegen.

In Ausführungsformen wird die ermittelte Ersatztrajektorie abgespeichert, wobei insbesondere eine Information, ob die ermittelte Ersatztrajektorie erfolgreich nachzufahren war, dazu gespeichert werden kann. Dann kann das nächste Mal, wenn der Nutzer die trainierte Trajektorie nachfahren lassen möchte, auf die gespeicherte Trajektorie zurückgegriffen werden. Dies kann einen erforderlichen Rechenaufwand reduzieren.

Gemäß einer Ausführungsform des Verfahrens verläuft die Ersatztrajektorie zumindest abschnittsweise innerhalb des stark gekrümmten Teilabschnitts und/oder die Ersatztrajektorie weist einen Teilabschnitt auf, dessen Krümmung verglichen mit der Krümmung des stark gekrümmten Teilabschnitts negativ ist und/oder die Ersatztrajektorie umfasst eine Anzahl von Fahrtrichtungswechsel-Teilabschnitten.

Darunter, dass die Ersatztrajektorie innerhalb des stark gekrümmten Teilabschnitts verläuft, wird beispielsweise verstanden, dass der Krümmungskreis oder Schmiegekreis, der ein mit dem Krümmungsradius gezeichneter und an dem stark gekrümmten Teilabschnitt anliegender Kreis ist, geschnitten wird.

Eine negative Krümmung bedeutet, dass die Krümmung bei gleicher Fahrtrichtung in die andere Richtung verläuft, was einer Änderung der Fahrtrichtung von einer Linkskurve in eine Rechtskurve oder umgekehrt entspricht. Man kann auch von einer konvexen oder konkaven Krümmung sprechen. Man kann auch sagen, dass der Krümmungskreis auf der anderen Seite der Trajektorie liegt.

Unter einem Fahrtrichtungswechsel-Teilabschnitt wird verstanden, dass das Fahrzeug in diesem Abschnitt die Fahrtrichtung ändert, also von einer Vorwärtsfahrt in eine Rückwärtsfahrt wechselt oder umgekehrt.

Gemäß einer weiteren Ausführungsform des Verfahrens liegt der Ersatzanfangspunkt in Bezug auf eine Fahrtrichtung des Fahrzeugs vor dem Anfangspunkt des stark gekrümmten Teilabschnitts auf der trainierten Trajektorie und/oder der Ersatzendpunkt liegt in Bezug auf eine Fahrtrichtung des Fahrzeugs hinter dem Endpunkt des stark gekrümmten Teilabschnitts auf der trainierten Trajektorie.

Damit ist sichergestellt, dass die Ersatztrajektorie den stark gekrümmten Teilabschnitt vollständig einschließt und z.B. ein Endpunkt der trainierten Trajektorie sicher angefahren werden kann.

Gemäß einer weiteren Ausführungsform des Verfahrens ist die Ersatztrajektorie kürzer als der stark gekrümmte Teilabschnitt.

Insbesondere dann, wenn die Ersatztrajektorie größtenteils oder vollständig innerhalb des stark gekrümmten Teilabschnitts verläuft, ist dies der Fall.

Gemäß einer weiteren Ausführungsform des Verfahrens ist ein maximaler Versatz zwischen der trainierten Trajektorie und der Ersatztrajektorie kleiner als ein vorgegebener Grenzwert.

Der Versatz kann auch als Abstand bezeichnet werden. Der maximale Versatz an einer bestimmten Position der Ersatztrajektorie ist insbesondere der kleinste Abstand zu einem Punkt entlang der trainierten Trajektorie. Der vorgegebene Grenzwert beträgt beispielsweise 1m, 2m, 3m, 4m oder bis zu 5m. Hierbei können für unterschiedliche Umgebungen, wie beispielsweise eine Tiefgarage, ein Parkhaus, eine Parkfläche auf einem Hof oder entlang einer Straße, unterschiedliche Grenzwerte für den maximalen Versatz vorgesehen sein.

Vorzugsweise wird hierbei auch eine Geometrie des Fahrzeugs berücksichtigt, so dass beispielsweise auch eine unterschiedliche Ausrichtung des Fahrzeugs zum Versatz beiträgt. Die Geometrie des Fahrzeugs kann beispielsweise durch die Grundfläche, die das Fahrzeug bedeckt, angenähert werden. Als Versatz lassen sich hierbei verschiedene Maße einführen. Beispielsweise können alle Punkte, die außerhalb einer von dem Fahrzeug in dem Trainingsmodus überstrichenen Fläche liegen, als Versatz angegebene werden. Alternativ kann auch ein Mittelwert oder ein RMS-Wert eines kleinsten Abstands dieser Punkte zu der überstrichenen Fläche als Versatz definiert werden.

Diese Ausführungsform stellt sicher, dass das Fahrzeug bei dem Nachfahren der Ersatztrajektorie sich nicht zu weit von der trainierten Trajektorie entfernt.

Gemäß einer weiteren Ausführungsform des Verfahrens umfasst die Ersatztrajektorie zumindest einen Fahrtrichtungswechsel-Teilabschnitt, dessen Krümmung kleiner als die Krümmung der Ersatztrajektorie an einem Teilabschnitt-Anfangspunkt des Fahrtrichtungswechsel-Teilabschnitts, vorzugsweise null, bevorzugt negativ, ist.

Man kann auch sagen, dass in dem Fahrtrichtungswechsel-Teilabschnitt gegengelenkt wird. Auf diese Weise lässt sich eine Abweichung einer Ausrichtung des Fahrzeugs gegenüber einer Ausrichtung des Fahrzeugs auf der trainierten Trajektorie besonders effizient korrigieren.

Gemäß einer weiteren Ausführungsform des Verfahrens ist ein Öffnungswinkel zwischen einer ersten Tangente an die Ersatztrajektorie an dem Teilabschnitt-Anfangspunkt des jeweiligen Fahrtrichtungswechsel-Teilabschnitts der Anzahl und einer zweiten Tangente an die trainierte Trajektorie an einem zu dem Teilabschnitt-Anfangspunkt korrespondierenden Punkt größer oder gleich einem vorgegebenen Grenzwert.

Der korrespondierende Punkt ist beispielsweise der Punkt auf der trainierten Trajektorie, der den kleinsten Abstand zu dem Teilabschnitt-Anfangspunkt aufweist. Der vorgegebene Grenzwert für den Öffnungswinkel beträgt beispielsweise 15°, 20°, 25°, 30°, 35°, 40° oder bis zu 45°. Hierbei können für unterschiedliche Umgebungen, wie beispielsweise eine Tiefgarage, ein Parkhaus, eine Parkfläche auf einem Hof oder entlang einer Straße, unterschiedliche Grenzwerte vorgesehen sein.

Gemäß einer weiteren Ausführungsform des Verfahrens umfasst die Ersatztrajektorie nach jeweils einer vorgegebenen Wegstrecke entlang der Ersatztrajektorie einen Fahrtrichtungswechsel-Teilabschnitt.

Die vorgegebene Wegstrecke kann als eine zurückgelegte Distanz definiert sein. Die vorgegebene Wegstrecke kann sich aber auch auf eine Änderung der Richtung beziehen, beispielsweise kann nach jeweils einer 45° Kurve oder einer 90° Kurve ein Fahrtrichtungswechsel-Teilabschnitt vorgesehen sein.

Gemäß einer weiteren Ausführungsform des Verfahrens weist die Ersatztrajektorie in einem Anfangsabschnitt, der direkt an den Ersatzanfangspunkt anschließt, und/oder in einem Endabschnitt, der direkt an den Ersatzendpunkt anschließt, eine negative Krümmung in Bezug auf den stark gekrümmten Teilabschnitt auf.

Gemäß einer weiteren Ausführungsform des Verfahrens werden der Ersatzanfangspunkt, der Ersatzendpunkt und die Ersatztrajektorie durch ein iteratives Optimierungsverfahren ermittelt.

Iterative Optimierungsverfahren eignen sich besonders, um verschiedene vorgegebene Grenzwerte, wie beispielsweise einen maximal zulässigen Versatz und/oder Öffnungswinkel, zu berücksichtigen. Weiterhin lassen sich bei iterativen Optimierungsverfahren dynamisch veränderliche Situationen, wie beispielsweise mobile Objekte oder Hindernisse, berücksichtigen.

In Ausführungsformen werden Umgebungssensordaten, die von Umgebungssensoren des Fahrzeugs und/oder von externen Umgebungssensoren bereitgestellt werden, bei dem Ermitteln berücksichtigt.

Diese Ausführungsform ist vorteilhaft, da zeitliche Veränderungen der Verkehrssituation, wie beispielsweise mobile Hindernisse, bei dem Ermitteln der Ersatztrajektorie berücksichtigt werden.

Gemäß einer weiteren Ausführungsform des Verfahrens wird eine Lokalisierung des Fahrzeugs an einer Lokalisierungsposition auf der trainierten Trajektorie, die vor dem Anfangspunkt des stark gekrümmten Teilabschnitts liegt, durchgeführt.

Unter Lokalisierung wird hierbei eine Standortbestimmung des Fahrzeugs verstanden. Der Standort kann beispielsweise durch Koordinaten auf einer Kugeloberfläche, die die Erde beschreibt, angegeben sein und insbesondere mit Hilfe eines satellitengestützten Systems, wie GPS, ermittelt werden. Der Standort kann aber auch in Bezug zu feststehenden Objekten, wie beispielsweise Gebäude oder einer Straßenmarkierung, bestimmt sein. Die Lokalisierung kann durch eine interne Einrichtung in Abhängigkeit von Umgebungssensordaten, oder auch durch eine externe Einrichtung, wie eine externe Kamera oder dergleichen, erfolgen.

In Ausführungsformen kann die Position des Fahrzeugs während des Nachfahrens der trainierten Trajektorie mittels Odometrie ermittelt werden. Alternativ hierzu kann die Lokalisierung des Fahrzeugs periodisch oder anlassbezogen wiederholt werden. Auf diese Weise kann ein Abdriften des tatsächlichen Standorts, beispielsweise aufgrund von Ungenauigkeiten in der ersten Lokalisierung und/oder während der Odometrie, vermieden werden.

Gemäß einer Ausführungsform des Verfahrens ist der in dem Nachfahrmodus vorgegebene größte zulässige Lenkwinkel für links und rechts unterschiedlich.

Aufgrund konstruktiver Unterschiede einer Radaufhängung und dergleichen können sich Unterschiede im Lenkverhalten des Fahrzeugs ergeben, die hiermit berücksichtigt werden können.

Gemäß einem zweiten Aspekt wird ein Computerprogrammprodukt vorgeschlagen, welches Befehle umfasst, die bei der Ausführung des Programms durch einen Computer diesen veranlassen, das vorstehend beschriebene Verfahren auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird ein Parkassistenzsystem für ein Fahrzeug vorgeschlagen, welches in einem Nachfahrmodus zum Fahren des Fahrzeugs entlang einer trainierten Trajektorie eingerichtet ist. Das Parkassistenzsystem umfassend eine Recheneinheit zum Erhalten der trainierten Trajektorie, die eine während eines Trainingsmodus manuell gefahrene Trajektorie ist, wobei die trainierte Trajektorie zumindest einen stark gekrümmten Teilabschnitt umfasst, dessen Krümmungsradius kleiner ist, als mit dem Fahrzeug mit einem in dem Nachfahrmodus vorgegebenen größten zulässigen Lenkeinschlag erzielt werden kann. Weiterhin umfasst das Parkassistenzsystem eine Bestimmungseinheit zum Bestimmen eines Anfangspunkts und eines Endpunkts des stark gekrümmten Teilabschnitts in der trainierten Trajektorie, und eine Ermittlungseinheit zum Ermitteln einer Ersatztrajektorie, die einen Ersatzanfangspunkt mit einem Ersatzendpunkt verbindet. Der Ersatzanfangspunkt und der Ersatzendpunkt liegen auf der trainierten Trajektorie und der stark gekrümmte Teilabschnitt liegt zwischen dem Ersatzanfangspunkt und dem Ersatzendpunkt, und eine maximale Krümmung der Ersatztrajektorie weist einen Krümmungsradius auf, der mit dem im Nachfahrmodus vorgegebenen größten zulässigen oder einem kleineren Lenkeinschlag erzielbar ist.

Dieses Parkassistenzsystem weist die gleichen Vorteile auf, wie zu dem Verfahren des ersten Aspekts erläutert. Die für das beschriebene Verfahren vorgeschlagenen Ausführungsformen und Merkmale gelten für das vorgeschlagene Parkassistenzsystem entsprechend. Das Parkassistenzsystem wird insbesondere mit dem Verfahren gemäß dem ersten Aspekt betrieben.

Die jeweilige Einheit, beispielsweise die Recheneinheit, die Bestimmungseinheit und/oder die Ermittlungseinheit, sowie das Parkassistenzsystem kann hardwaretechnisch und/oder softwaretechnisch implementiert sein. Bei einer hardwaretechnischen Implementierung kann die Einheit zum Beispiel als Computer oder als Mikroprozessor ausgebildet sein. Bei einer softwaretechnischen Implementierung kann die Einheit als Computerprogrammprodukt, als eine Funktion, als eine Routine, als Teil eines Programmcodes oder als ausführbares Objekt ausgebildet sein.

Gemäß einem vierten Aspekt wird ein Fahrzeug mit einem Parkassistenzsystem gemäß dem dritten Aspekt vorgeschlagen.

Das Fahrzeug ist vorzugsweise ein Personenkraftfahrzeug oder auch ein Lastkraftfahrzeug.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt eine schematische Ansicht eines Fahrzeugs aus einer Vogelperspektive;
- Fig. 2: zeigt schematisch ein erstes Beispiel einer Ersatztrajektorie;
- Fig. 3: zeigt schematisch ein zweites Beispiel einer Ersatztrajektorie;
- Fig. 4: zeigt schematisch ein drittes Beispiel einer Ersatztrajektorie;
- Fig. 5: zeigt schematisch ein viertes Beispiel einer Ersatztrajektorie;
- Fig. 6: zeigt schematisch eine Trajektorie mit Krümmungskreisen;
- Fig. 7: zeigt ein schematisches Blockschaltbild eines Ausführungsbeispiels eines Verfahrens zum Betreiben eines Parkassistenzsystems; und
- Fig. 8: zeigt ein schematisches Blockdiagramm eines Beispiels für ein Parkassistenzsystem.

In den Figuren sind gleiche oder funktionsgleiche Elemente mit denselben Bezugszeichen versehen worden, sofern nichts anderes angegeben ist.

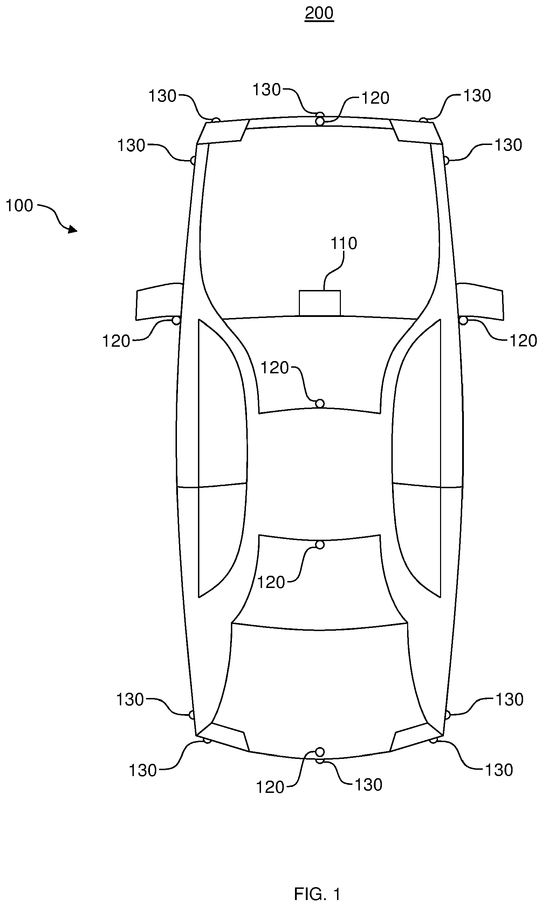

Fig. 1 zeigt eine schematische Ansicht eines Fahrzeugs 100 aus einer Vogelperspektive. Das Fahrzeug 100 ist beispielsweise ein Auto, das in einer Umgebung 200 angeordnet ist. Das Auto 100 weist ein Parkassistenzsystem 110 auf, das beispielsweise als ein Steuergerät ausgebildet ist. Zudem sind an dem Auto 100 eine Mehrzahl an Sensoreinrichtungen 120, 130 angeordnet, wobei es sich beispielhaft um optische Sensoren 120 und Ultraschallsensoren 130 handelt. Die optischen Sensoren 120 umfassen beispielsweise visuelle Kameras, ein RADAR (*radio detection and ranging*) und/oder ein LIDAR (*light detection and ranging*)*.* Die optischen Sensoren 120 können jeweils ein Bild eines jeweiligen Bereichs aus der Umgebung 200 des Autos 100 erfassen und als optisches Sensorsignal ausgeben. Die Ultraschallsensoren 130 sind zum Erfassen eines Abstands zu in der Umgebung 200 angeordneten Objekten und zum Ausgeben eines entsprechenden Sensorsignals eingerichtet. Mittels der von den Sensoren 120, 130 erfassten Sensorsignalen ist das Parkassistenzsystem 110 in der Lage, das Auto 100 teilautonom oder auch vollautonom zu fahren. Außer den in der Fig. 1 dargestellten optischen Sensoren 120 und Ultraschallsensoren 130 kann vorgesehen sein, dass das Fahrzeug 100 verschiedene weitere Sensoreinrichtungen 120, 130 aufweist. Beispiele hierfür sind ein Mikrofon, ein Beschleunigungssensor, eine Antenne mit gekoppeltem Empfänger zum Empfangen von elektromagnetisch übertragbarer Datensignale, und dergleichen mehr. Das Fahrzeug 100 umfasst ferner vorzugsweise eine Lokalisierungseinheit (nicht gezeigt), die dazu eingerichtet ist, eine Position des Fahrzeugs 100 in der Umgebung 200 zu erfassen und an das Parkassistenzsystem 110 auszugeben.

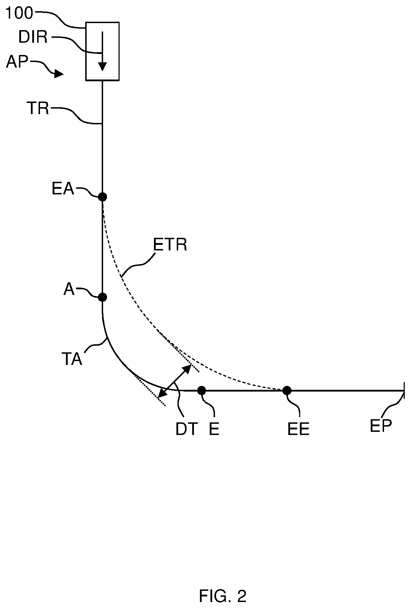

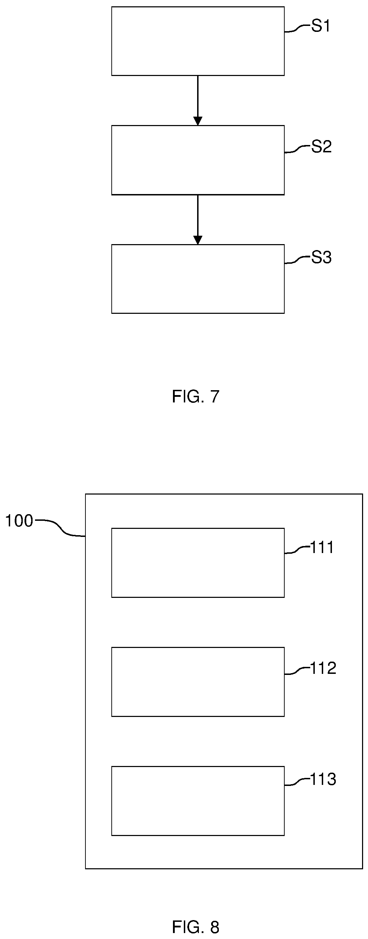

Parkassistenzsystem 110 ist zum Fahren des Fahrzeugs 100 entlang einer trainierten Trajektorie TR (siehe Fig. 2 - 6) in einem Nachfahrmodus eingerichtet. Das Parkassistenzsystem 110 umfasst beispielsweise eine Recheneinheit 111 (siehe Fig. 8), eine Bestimmungseinheit 112 (siehe Fig. 8) und eine Ermittlungseinheit 113 (siehe Fig. 8).

Fig. 2 zeigt schematisch ein erstes Beispiel einer Ersatztrajektorie ETR, die ausgehend von einer trainierten Trajektorie TR ermittelt wurde. Die trainierte Trajektorie TR beginnt an einer Anfangsposition AP, auf welcher das Fahrzeug 100 mit der vorgesehenen Fahrtrichtung DIR angedeutet ist, und endet an einer Endposition EP. Die trainierte Trajektorie TR weist einen stark gekrümmten Teilabschnitt TA auf, der an einem Anfangspunkt A beginnt und sich bis zu einem Endpunkt E erstreckt und dabei eine 90°-Kurve beschreibt. Der Lenkeinschlag, der notwendig ist, um mit dem Fahrzeug 100 den stark gekrümmten Teilabschnitt TA nachzufahren, ist höher als ein in dem Nachfahrmodus des Parkassistenzsystems 110 (siehe Fig. 1 oder 8) maximal zulässiger Lenkeinschlag. Daher ermittelt das Parkassistenzsystem 110 eine Ersatztrajektorie ETR, die einen Ersatzanfangspunkt EA mit einem Ersatzendpunkt EE verbindet und deren Krümmung mit einem Lenkeinschlag erreicht wird, der in dem Nachfahrmodus erreichbar ist. Der Ersatzanfangspunkt EA liegt auf der trainierten Trajektorie TR vor dem Anfangspunkt A des stark gekrümmten Teilabschnitts TA. Der Ersatzendpunkt EE liegt auf der trainierten Trajektorie TR nach dem Endpunkt E des stark gekrümmten Teilabschnitts TA. Die Ersatztrajektorie ETR schneidet somit die durch den stark gekrümmten Teilabschnitt TA definierte Kurve. Indem das Parkassistenzsystem 110 die trainierte Trajektorie TR unter Verwendung der Ersatztrajektorie ETR nachfährt, gelangt das Fahrzeug 100 von der Anfangsposition AP zu der Endposition EP, ohne dass der Grenz-Lenkwinkel überschritten wird und ohne dass eine maximale Abweichung DT von der trainierten Trajektorie TR einen oberen Grenzwert überschreitet. Der obere Grenzwert für den maximalen Versatz DT ist vorzugsweise vorgegeben und kann für unterschiedliche trainierte Trajektorien TR oder für unterschiedliche Teilabschnitte entlang der trainierten Trajektorie TR verschieden sein. Ferner kann der obere Grenzwert für den maximalen Versatz DT in Abhängigkeit einer Beschaffenheit der Umgebung 200 (siehe Fig. 1), insbesondere von in der Umgebung 200 vorhandenen Hindernissen oder Objekten, vorgegeben sein. Es sei ferner angemerkt, dass der maximal zulässige Versatz DT nicht ausgeschöpft werden muss. Vorzugsweise wird die Ersatztrajektorie ETR so ermittelt, dass der maximale Versatz an jedem Punkt minimal ist.

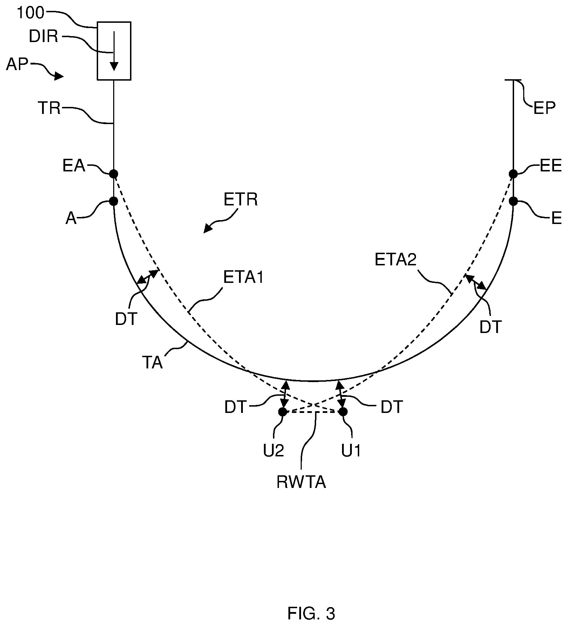

Fig. 3 zeigt schematisch ein zweites Beispiel einer Ersatztrajektorie ETR für eine trainierte Trajektorie TR, die vorliegend einen stark gekrümmten Teilabschnitt TA, der eine 180°-Kurve beschreibt, aufweist. Die Krümmung des stark gekrümmten Teilabschnitts TA ist höher als eine in dem Nachfahrmodus maximal erreichbare Krümmung. Die Ersatztrajektorie ETR umfasst hierbei drei Teilabschnitte, einen ersten Teilabschnitt ETA1, einen zweiten Teilabschnitt ETA2 und einen Fahrtrichtungswechsel-Teilabschnitt RWTA. Die Krümmung der Ersatztrajektorie ETR ist in jedem Punkt kleiner oder gleich der maximal zulässigen Krümmung. Der erste Teilabschnitt ETA1 verbindet den Ersatzanfangspunkt EA, der auf der trainierten Trajektorie TR liegt, mit einem ersten Umkehrpunkt U1, an dem der Fahrtrichtungswechsel durchgeführt wird. Der Fahrtrichtungswechsel-Teilabschnitt RWTA verbindet den ersten Umkehrpunkt U1 mit einem zweiten Umkehrpunkt U2, an dem ein weiterer Fahrtrichtungswechsel durchgeführt wird. Die Fahrtrichtung DIR des Fahrzeugs 100 ist auf dem Fahrtrichtungswechsel-Teilabschnitt RWTA somit umgekehrt zu der Fahrtrichtung DIR des Fahrzeugs 100 in den anderen Punkten der Ersatztrajektorie ETR. Der zweite Teilabschnitt ETA2 verbindet den zweiten Umkehrpunkt U2 mit dem Ersatzendpunkt EE, der wieder auf der trainierten Trajektorie TR liegt.

Es ist ersichtlich, dass die Ersatztrajektorie ETR teilweise innerhalb und teilweise außerhalb des stark gekrümmten Teilabschnitts TA verläuft. Der Fahrtrichtungswechsel-Teilabschnitt RWTA wurde so ermittelt, dass ein maximal zulässiger Versatz DT zu der trainierten Trajektorie TR nicht überschritten wird. Der maximal zulässige Versatz DT beträgt beispielsweise 0,3m, 0,5m, 1m, 2m, 3m, 4m oder bis zu 5m, wobei als Versatz DT beispielsweise ein Abstand der beiden Trajektorien zueinander definiert ist. Durch das Zurücksetzen des Fahrzeugs 100 in dem Fahrtrichtungswechsel-Teilabschnitt RWTA wird vorliegend beispielsweise sichergestellt, dass die Ersatztrajektorie ETR im weiteren Verlauf nicht nach rechts über die trainierte Trajektorie TR hinaus verläuft, was beispielsweise durch ein bauliches Hindernis (nicht gezeigt) blockiert sein könnte.

Es sei angemerkt, dass die Ersatztrajektorie ETR auch so ermittelt werden kann, dass diese vollständig innerhalb des stark gekrümmten Teilabschnitts TA verläuft, beispielsweise indem der Ersatzanfangspunkt EA noch weiter in Richtung der Anfangsposition AP und der Ersatzendpunkt EE noch weiter in Richtung der Endposition EP verschoben wird und/oder indem mehrere Fahrtrichtungswechsel-Teilabschnitte RWTA eingefügt werden, die dann jeweils innerhalb des stark gekrümmten Teilabschnitts TA liegen. In diesem Fall würde die Ersatztrajektorie ETR dann die trainierte Trajektorie TR nicht mehr schneiden oder kreuzen.

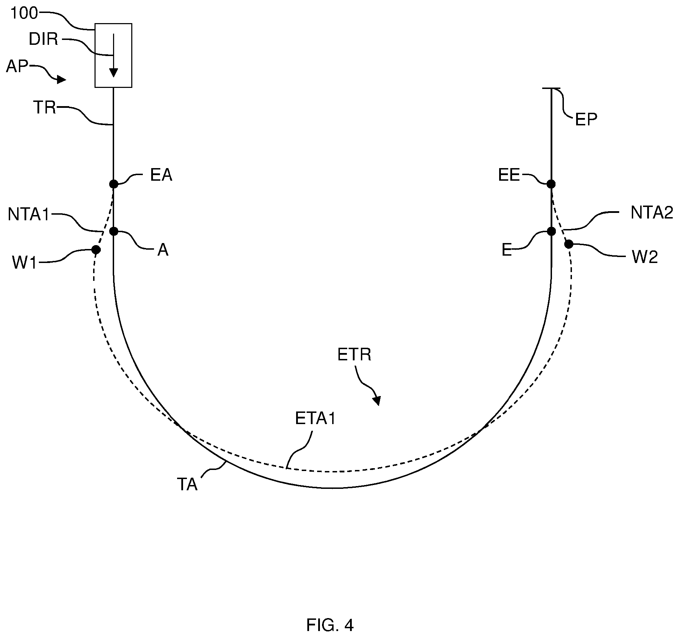

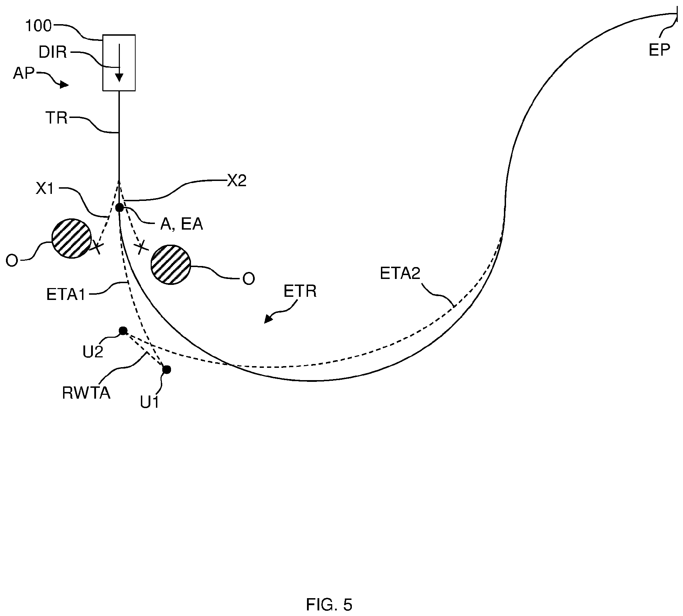

Fig. 4 zeigt schematisch ein drittes Beispiel einer Ersatztrajektorie ETR für eine trainierte Trajektorie TR, die vorliegend einen stark gekrümmten Teilabschnitt TA, der eine 180°-Kurve beschreibt, aufweist. Die Krümmung des stark gekrümmten Teilabschnitts TA ist höher als eine in dem Nachfahrmodus maximal erreichbare Krümmung. Die Ersatztrajektorie ETR kommt in diesem Fall ohne einen Fahrtrichtungswechsel-Teilabschnitt RWTA (siehe Fig. 3 oder 5) aus. Stattdessen weist die Ersatztrajektorie ETR in einem Anfangsabschnitt NTA1 und einem Endabschnitt NTA2 eine negative Krümmung im Vergleich zu der Krümmung des stark gekrümmten Teilabschnitts TA auf. Der Anfangsabschnitt NTA1 erstreckt sich von dem Ersatzanfangspunkt EA bis zu einem Wendepunkt W1, an dem die Krümmung wieder positiv wird. Der Endabschnitt NTA2 erstreckt sich von einem Wendepunkt W2, an dem die Krümmung negativ wird, bis zu dem Ersatzendpunkt EE.

Es ist erkennbar, dass die Ersatztrajektorie ETR die trainierte Trajektorie TR in einer Richtung parallel zu der Anfangsfahrtrichtung DIR des Fahrzeugs 100 nicht überschreitet. Ferner wird ein maximal zulässiger Versatz DT (siehe Fig. 2 oder 3) zu der trainierten Trajektorie TR nicht überschritten (nicht dargestellt).

Fig. 5 zeigt schematisch ein viertes Beispiel einer Ersatztrajektorie ETR. In diesem Beispiel befinden sich zwei Hindernisse O, die feststehende Hindernisse oder auch mobile Hindernisse sein können, neben der trainierten Trajektorie TR. Die trainierte Trajektorie TR weist einen stark gekrümmten Teilabschnitt TA, der eine 180°-Kurve beschreibt, auf, gefolgt von einem Abschnitt, der eine 90°-Kurve beschreibt, dessen Krümmung die maximal zulässige Krümmung nicht überschreitet. Ersatztrajektorien ETR, wie vorstehend anhand der Fig. 3 und 4 beschrieben, sind nicht möglich, da dies zu einer Kollision mit einem der Hindernisse O führen könnte. Dies ist durch die Trajektorien X1, X2 angedeutet. Daher wird die Ersatztrajektorie ETR wie folgt ermittelt. Der hier Ersatzanfangspunkt EA stimmt mit dem Anfangspunkt A des stark gekrümmten Teilabschnitts TA überein. Ein erster Ersatzteilabschnitt ETA1 verläuft außerhalb des stark gekrümmten Teilabschnitts TA bis zu einem ersten Umkehrpunkt U1. An diesen schließt sich ein Fahrtrichtungswechsel-Teilabschnitt RWTA bis zu einem zweiten Umkehrpunkt U2 an. In einem zweiten Ersatzteilabschnitt ETA2 wird dir trainierte Trajektorie TR geschnitten, so dass der zweite Ersatzteilabschnitt ETA2 teilweise außerhalb und teilweise innerhalb des stark gekrümmten Teilabschnitts TA verläuft.

Dieses Beispiel zeigt, dass die Ersatztrajektorie ETR mit den beschriebenen Konzepten, insbesondere mit Abschnitten negativer Krümmung NTA1, NTA2 (siehe Fig. 4) sowie mit Fahrtrichtungswechsel-Teilabschnitten RWTA, beliebig erzeugt oder aufgebaut werden kann. Daher ist eine sehr hohe Flexibilität beim finden einer geeigneten Ersatztrajektorie ETR ermöglicht. Daher kann die Ersatztrajektorie ETR auch bei sich verändernden Situationen, wie bei neuen und/oder mobilen Hindernissen O und dergleichen, erfolgreich ermittelt werden. Insbesondere ist sichergestellt, dass ein maximal zulässiger Versatz DT (siehe Fig. 2 oder 3) zu der trainierten Trajektorie TR nicht überschritten wird (nicht dargestellt).

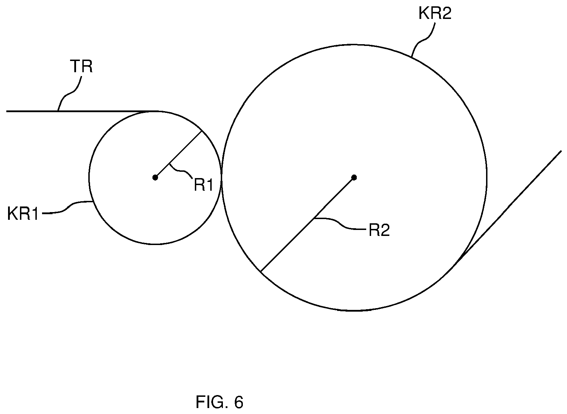

Fig. 6 zeigt schematisch eine Trajektorie TR mit Krümmungskreisen KR1, KR2. Der Krümmungskreis KR wiest einen Krümmungsradius R1 auf, der Krümmungskreis KR2 weist einen Krümmungsradius R2 auf. Die Krümmungskreise KR1, KR2 können auch als Schmiegekreise bezeichnet werden. Die Krümmung der Trajektorie TR ist in dem Abschnitt, der durch den Krümmungskreis KR1 beschrieben wird, negativ im Vergleich zu der Krümmung der Trajektorie TR in dem Abschnitt, der durch den Krümmungskreis KR2 beschrieben wird.

Eine Ersatztrajektorie ETR (siehe Fig. 2 - 5) wird als innerhalb des stark gekrümmten Abschnitts TA (siehe Fig. 2 - 5) verlaufend bezeichnet, wenn diese den entsprechenden Krümmungskreis KR1, KR2 an die trainierte Trajektorie TR schneidet, also innerhalb des Krümmungskreises KR1, KR2 verläuft.

Fig. 7 zeigt ein schematisches Blockschaltbild eines Ausführungsbeispiels eines Verfahrens zum Betreiben eines Fahrzeugs 100 (siehe Fig. 1 - 5) mittels eines Parkassistenzsystems 110 (siehe Fig. 1 oder 8). Das Parkassistenzsystem 110 ist in einem Nachfahrmodus zum Fahren des Fahrzeugs 100 entlang einer trainierten Trajektorie TR (siehe Fig. 2 - 6) eingerichtet. Das Fahrzeug 100 umfasst vorzugsweise eine Anzahl an Umgebungssensoren 120, 130 (siehe Fig. 1) zum Erfassen der Umgebung 200 (siehe Fig. 1) des Fahrzeugs 100 und zum Ausgeben eines korrespondierenden Sensorsignals an das Parkassistenzsystem 110. Das Parkassistenzsystem 100 ist dann vorzugsweise dazu eingerichtet, ein automatisches Park- oder Nachfahrmanöver in Abhängigkeit der empfangenen Sensorsignale durchzuführen.

Das Verfahren umfasst in einem ersten Schritt S1 ein Erhalten der trainierten Trajektorie TR, die in einem Trainingsmodus, in welchem eine manuell gefahrene Trajektorie als die trainierte Trajektorie TR erfasst wird. In dem Trainingsmodus, der von einem Nutzer des Fahrzeugs 100 beispielsweise durch eine entsprechende Eingabe aktiviert wird, zeichnet das Parkassistenzsystems 110 zum Beispiel fortlaufend eine Position des Fahrzeugs 100 in der Umgebung 200, eine Anordnung von Objekten oder Hindernissen O (siehe Fig. 6) relativ zu dem Fahrzeug 100 sowie Odometriedaten des Fahrzeugs 100 auf. Die Odometriedaten umfassen insbesondere einen aktuellen Lenkwinkel, eine Gaspedal- und eine Bremspedalstellung. Die trainierte Trajektorie TR umfasst zumindest einen stark gekrümmten Teilabschnitt TA (siehe Fig. 2 - 5), dessen Krümmungsradius R1, R2 (siehe Fig. 6) kleiner ist, als ein Radius, der mit dem Fahrzeug 100 mit einem in dem Nachfahrmodus vorgegebenen größten zulässigen Lenkeinschlag erzielbar ist.

In einem zweiten Schritt S2 wird ein Anfangspunkt A (siehe Fig. 2 - 5) und ein Endpunkt E (siehe Fig. 2 - 5) des stark gekrümmten Teilabschnitts TA in der trainierten Trajektorie TR festgelegt. Dies kann bereits während einem sensorischen Erfassen oder Erhalten der Trajektorie erfolgen oder auch erst dann, wenn die trainierte Trajektorie TR zum Nachfahren ausgewählt oder aktiviert wird.

In einem dritten Schritt S3 wird eine Ersatztrajektorie ETR (siehe Fig. 2 - 5) ermittelt, die einen Ersatzanfangspunkt EA (siehe Fig. 2 - 5) mit einem Ersatzendpunkt EE (siehe Fig. 2 -5) verbindet, wobei der Ersatzanfangspunkt EA und der Ersatzendpunkt EP jeweils auf der trainierten Trajektorie TR liegen und der stark gekrümmte Teilabschnitt TA zwischen dem Ersatzanfangspunkt EA und dem Ersatzendpunkt EE liegt. Zudem weist eine maximale Krümmung der Ersatztrajektorie ETR einen Krümmungsradius R1, R2 auf, der mit dem im Nachfahrmodus vorgegebenen größten zulässigen oder einem dazu kleineren Lenkeinschlag erzielbar ist. Die derart ermittelte Ersatztrajektorie ETR kann daher in dem Nachfahrmodus ohne Probleme nachgefahren werden.

Fig. 8 zeigt ein schematisches Blockdiagramm eines Beispiels für ein Parkassistenzsystem 110. Das Parkassistenzsystem 110 ist beispielsweise in ein Fahrzeug 100 (siehe Fig. 1), wie ein Personenkraftfahrzeug oder ein Lastkraftfahrzeug, eingebaut. Das Parkassistenzsystem 110 umfasst eine Recheneinheit 111 zum Erhalten einer trainierten Trajektorie TR (siehe Fig. 2 - 6), die eine während eines Trainingsmodus manuell gefahrene Trajektorie ist, wobei die trainierte Trajektorie TR zumindest einen stark gekrümmten Teilabschnitt TA (siehe Fig. 2 -5) umfasst, dessen Krümmungsradius R1, R2 (siehe Fig. 6) kleiner ist, als mit dem Fahrzeug 100 mit einem in dem Nachfahrmodus vorgegebenen größten zulässigen Lenkeinschlag erzielbar ist. Weiterhin ist eine Bestimmungseinheit 112 zum Bestimmen eines Anfangspunkts A (siehe Fig. 2 - 5) und eines Endpunkts E (siehe Fig. 2 - 5) des stark gekrümmten Teilabschnitts TA in der trainierten Trajektorie TR vorgesehen sowie eine Ermittlungseinheit 113 zum Ermitteln einer Ersatztrajektorie ETR (siehe Fig. 2 - 5). Die ermittelte Ersatztrajektorie ETR verbindet einen Ersatzanfangspunkt EA (siehe Fig. 2 - 5) mit einem Ersatzendpunkt EE (siehe Fig. 2 - 5), die jeweils auf der trainierten Trajektorie TR liegen, wobei der stark gekrümmte Teilabschnitt TA zwischen dem Ersatzanfangspunkt EA und dem Ersatzendpunkt EE liegt. Eine maximale Krümmung der Ersatztrajektorie ETR weist einen Krümmungsradius R1, R2 (siehe Fig. 6) auf, der mit dem im Nachfahrmodus vorgegebenen größten zulässigen Lenkeinschlag erzielbar ist.

Die jeweilige Einheit, beispielsweise die Recheneinheit 111, die Bestimmungseinheit 112 und/oder die Ermittlungseinheit 113, sowie das Parkassistenzsystem 110, kann hardwaretechnisch und/oder softwaretechnisch implementiert sein. Bei einer hardwaretechnischen Implementierung kann die Einheit zum Beispiel als Computer oder als Mikroprozessor ausgebildet sein. Bei einer softwaretechnischen Implementierung kann die Einheit als Computerprogrammprodukt, als eine Funktion, als eine Routine, als Teil eines Programmcodes oder als ausführbares Objekt ausgebildet sein.

Das Parkassistenzsystem 110 weist ferner vorzugsweise nicht dargestellte Schnittstellen zu Umgebungssensoren 120, 130, die an dem Fahrzeug 100 und/oder in der Umgebung 200 angeordnet sind, auf, über welche das Parkassistenzsystem 110 Sensorsignale empfängt, die dem Parkassistenzsystem 110 eine exakte Positionsschätzung und/oder Lageschätzung des Fahrzeugs 100 ermöglichen und in deren Abhängigkeit des Parkassistenzsystem 110 das Fahrzeug 100 steuert. Vorzugsweise ist auch die Ermittlungseinheit 113 dazu eingerichtet, die empfangenen Umgebungssensorsignale bei dem Ermitteln der Ersatztrajektorie ETR zu berücksichtigen.

Obwohl die vorliegende Erfindung anhand von Ausführungsbeispielen beschrieben wurde, ist sie vielfältig modifizierbar.

### BEZUGSZEICHENLISTE

- 100: Fahrzeug
- 110: Parkassistenzsystem
- 111: Recheneinheit
- 112: Bestimmungseinheit
- 113: Ermittlungseinheit
- 120: optischer Sensor
- 130: Ultraschallsensor
- A: Anfangspunkt
- AP: Anfangsposition
- DIR: Fahrtrichtung
- DT: Abstand
- E: Endpunkt
- EA: Ersatzanfangspunkt
- EE: Ersatzendpunkt
- EP: Endposition
- ETA1: Ersatz-Teilabschnitt
- ETA2: Ersatz-Teilabschnitt
- ETR: Ersatztrajektorie
- KR1: Krümmungskreis
- KR2: Krümmungskreis
- NTA1: Anfangsabschnitt
- NTA2: Endabschnitt
- O: Hindernis
- PP: Parkposition
- R1: Krümmungsradius
- R2: Krümmungsradius
- RWTA: Fahrtrichtungswechsel-Teilabschnitt
- S1: Verfahrensschritt
- S2: Verfahrensschritt
- S3: Verfahrensschritt
- TA: stark gekrümmter Teilabschnitt
- TR: trainierte Trajektorie
- U1: Umkehrpunkt
- U2: Umkehrpunkt
- W1: Wendepunkt
- W2: Wendepunkt
- X1: Kollisionstrajektorie
- X2: Kollisionstrajektorie

## Patentansprüche

1. Verfahren zum Betreiben eines Fahrzeugs (100) mittels eines Parkassistenzsystems (110), welches in einem Nachfahrmodus zum Fahren des Fahrzeugs (100) entlang einer trainierten Trajektorie (TR) oder zum Veranlassen des Fahrens eingerichtet ist, wobei das Verfahren aufweist:
a) Erhalten (S1) der trainierten Trajektorie (TR), die in einem Trainingsmodus, in welchem eine manuell gefahrene Trajektorie als die trainierte Trajektorie (TR) erfasst wird, wobei die trainierte Trajektorie (TR) zumindest einen stark gekrümmten Teilabschnitt (TA) umfasst, dessen Krümmungsradius (R1, R2) kleiner ist, als ein Radius, der mit dem Fahrzeug (100) mit einem in dem Nachfahrmodus vorgegebenen größten zulässigen Lenkeinschlag erzielbar ist,
b) Bestimmen (S2) eines Anfangspunkts (A) und eines Endpunkts (E) des stark gekrümmten Teilabschnitts (TA) in der trainierten Trajektorie (TR),
c) Ermitteln (S3) einer Ersatztrajektorie (ETR), die einen Ersatzanfangspunkt (EA) mit einem Ersatzendpunkt (EE) verbindet, wobei
der Ersatzanfangspunkt (EA) und der Ersatzendpunkt (EE) jeweils auf der trainierten Trajektorie (TR) liegen und der stark gekrümmte Teilabschnitt (TA) zwischen dem Ersatzanfangspunkt (EA) und dem Ersatzendpunkt (EE) liegt, und
eine maximale Krümmung der Ersatztrajektorie (ETR) einen Krümmungsradius (R1, R2) aufweist, der mit dem im Nachfahrmodus vorgegebenen größten zulässigen oder einem kleineren Lenkeinschlag erzielbar ist.

2. Verfahren nach Anspruch 1, **dadurch gekennzeichnet, dass** die Ersatztrajektorie (ETR) zumindest abschnittsweise innerhalb des stark gekrümmten Teilabschnitts (TA) verläuft und/oder dass die Ersatztrajektorie (ETR) einen Teilabschnitt aufweist, dessen Krümmung verglichen mit der Krümmung des stark gekrümmten Teilabschnitts (TA) negativ ist und/oder dass die Ersatztrajektorie (ETR) eine Anzahl von Fahrtrichtungswechsel-Teilabschnitten (RWTA) umfasst.

3. Verfahren nach Anspruch 1 oder 2, **dadurch gekennzeichnet, dass** der Ersatzanfangspunkt (EA) in Bezug auf eine Fahrtrichtung (DIR) des Fahrzeugs (100) vor dem Anfangspunkt (A) des stark gekrümmten Teilabschnitts (TA) auf der trainierten Trajektorie (TR) liegt und/oder dass der Ersatzendpunkt (EA) in Bezug auf die Fahrtrichtung (DIR) des Fahrzeugs (100) hinter dem Endpunkt (E) des stark gekrümmten Teilabschnitts (TA) auf der trainierten Trajektorie (TR) liegt.

4. Verfahren nach einem der vorhergehenden Ansprüche, **dadurch gekennzeichnet, dass** die Ersatztrajektorie (ETR) kürzer ist als der stark gekrümmte Teilabschnitt (TA).

5. Verfahren nach einem der vorgehenden Ansprüche, **dadurch gekennzeichnet, dass** ein maximaler Versatz (DT) zwischen der trainierten Trajektorie (TR) und der Ersatztrajektorie (ETR) kleiner als ein vorgegebener Grenzwert ist.

6. Verfahren nach einem der vorgehenden Ansprüche, **dadurch gekennzeichnet, dass** die Ersatztrajektorie (ETR) zumindest einen Fahrtrichtungswechsel-Teilabschnitt (RWTA) umfasst, dessen Krümmung kleiner als die Krümmung der Ersatztrajektorie (ETR) an einem Teilabschnitt-Anfangspunkt (U1) des Fahrtrichtungswechsel-Teilabschnitts (RWTA), vorzugsweise null, bevorzugt negativ, ist.

7. Verfahren nach einem der vorgehenden Ansprüche, **dadurch gekennzeichnet, dass** ein Öffnungswinkel zwischen einer ersten Tangente an die Ersatztrajektorie (ETR) an dem Teilabschnitt-Anfangspunkt (U1) des jeweiligen Fahrtrichtungswechsel-Teilabschnitts (RWTA) der Anzahl und einer zweiten Tangente an die trainierte Trajektorie (TR) an einem zu dem Teilabschnitt-Anfangspunkt (U1) korrespondierenden Punkt größer oder gleich einem vorgegebenen Grenzwert ist.

8. Verfahren nach einem der vorgehenden Ansprüche, **dadurch gekennzeichnet, dass** die Ersatztrajektorie (ETR) nach jeweils einer vorgegebenen Wegstrecke entlang der Ersatztrajektorie (ETR) einen Fahrtrichtungswechsel-Teilabschnitt (RWTA) enthält.

9. Verfahren nach einem der vorgehenden Ansprüche, **dadurch gekennzeichnet, dass** die Ersatztrajektorie (ETR) in einem Anfangsabschnitt (NTA1), der direkt an den Ersatzanfangspunkt (EA) anschließt, und/oder in einem Endabschnitt (NTA2), der direkt an den Ersatzendpunkt (EE) anschließt, eine negative Krümmung in Bezug auf den stark gekrümmten Teilabschnitt (TA) aufweist.

10. Verfahren nach einem der vorgehenden Ansprüche, **dadurch gekennzeichnet, dass** der Ersatzanfangspunkt (EA), der Ersatzendpunkt (EE) und die Ersatztrajektorie (ETR) durch ein iteratives Optimierungsverfahren ermittelt werden, wobei Umgebungssensordaten, die von Umgebungssensoren (120, 130) des Fahrzeugs (100) und/oder von externen Umgebungssensoren bereitgestellt werden, bei dem Ermitteln berücksichtigt werden.

11. Verfahren nach einem der vorgehenden Ansprüche, **dadurch gekennzeichnet, dass** eine Lokalisierung des Fahrzeugs (100) an einer Lokalisierungsposition auf der trainierten Trajektorie (TR), die vor dem Anfangspunkt (A) des stark gekrümmten Teilabschnitts (TA) liegt, durchgeführt wird.

12. Verfahren nach einem der vorgehenden Ansprüche, **dadurch gekennzeichnet, dass** der in dem Nachfahrmodus vorgegebene größte zulässige Lenkwinkel für links und rechts unterschiedlich ist.

13. Computerprogrammprodukt, umfassend Befehle, die bei der Ausführung des Programms durch einen Computer diesen veranlassen, das Verfahren nach einem der Ansprüche 1 - 12 auszuführen.

14. Parkassistenzsystem (110) für ein Fahrzeug (100), welches in einem Nachfahrmodus zum Fahren des Fahrzeugs (100) entlang einer trainierten Trajektorie (TR) oder zum Veranlassen des Fahrens eingerichtet ist, das Parkassistenzsystem (110) umfassend:
eine Recheneinheit (111) zum Erhalten der trainierten Trajektorie (TR), die eine während eines Trainingsmodus manuell gefahrene Trajektorie ist, wobei die trainierte Trajektorie (TR) zumindest einen stark gekrümmten Teilabschnitt (TA) umfasst, dessen Krümmungsradius (R1, R2) kleiner ist, als mit dem Fahrzeug (100) mit einem in dem Nachfahrmodus vorgegebenen größten zulässigen Lenkeinschlag erzielbar ist,
eine Bestimmungseinheit (112) zum Bestimmen eines Anfangspunkts (A) und eines Endpunkts (E) des stark gekrümmten Teilabschnitts (TA) in der trainierten Trajektorie (TR), und
eine Ermittlungseinheit (113) zum Ermitteln einer Ersatztrajektorie (ETR), die einen Ersatzanfangspunkt (EA) mit einem Ersatzendpunkt (EE) verbindet, wobei
der Ersatzanfangspunkt (EA) und der Ersatzendpunkt (EE) jeweils auf der trainierten Trajektorie (TR) liegen und der stark gekrümmte Teilabschnitt (TA) zwischen dem Ersatzanfangspunkt (EA) und dem Ersatzendpunkt (EE) liegt, und
eine maximale Krümmung der Ersatztrajektorie (ETR) einen Krümmungsradius (R1, R2) aufweist, der mit dem im Nachfahrmodus vorgegebenen größten zulässigen oder einem kleineren Lenkeinschlag erzielbar ist.

15. Fahrzeug (100) mit einem Parkassistenzsystem (110) gemäß Anspruch 14.

## Claims

1. Method for operating a vehicle (100) by means of a parking assistance system (110) which is configured, in a following mode, to drive the vehicle (100) along a trained trajectory (TR) or to initiate driving, wherein the method comprises:
a) receiving (S1) the trained trajectory (TR) which in a training mode in which a manually navigated trajectory is recorded as the trained trajectory (TR), wherein the trained trajectory (TR) comprises at least one strongly curved section (TA), the radius of curvature (R1, R2) of which is smaller than a radius that can be achieved with the vehicle (100) with a maximum permissible steering lock predefined in the following mode,
b) determining (S2) a starting point (A) and an end point (E) of the strongly curved section (TA) in the trained trajectory (TR),
c) ascertaining (S3) a substitute trajectory (ETR) which connects a substitute starting point (EA) to a substitute end point (EE), wherein
the substitute starting point (EA) and the substitute end point (EE) are each on the trained trajectory (TR) and the strongly curved section (TA) is between the substitute starting point (EA) and the substitute end point (EE), and
a maximum curvature of the substitute trajectory (ETR) has a radius of curvature (R1, R2) that can be achieved with the maximum permissible steering lock predefined in the following mode or with a smaller steering lock.

2. Method according to Claim 1, **characterized in that** the substitute trajectory (ETR) runs at least in sections within the strongly curved section (TA), and/or **in that** the substitute trajectory (ETR) has a section whose curvature is negative in comparison with the curvature of the strongly curved section (TA), and/or **in that** the substitute trajectory (ETR) comprises a number of travel direction change sections (RWTA).

3. Method according to Claim 1 or 2, **characterized in that** the substitute starting point (EA) is before the starting point (A) of the strongly curved section (TA) on the trained trajectory (TR) in relation to a travel direction (DIR) of the vehicle (100), and/or **in that** the substitute end point (EA) is after the end point (E) of the strongly curved section (TA) on the trained trajectory (TR) in relation to the travel direction (DIR) of the vehicle (100).

4. Method according to one of the preceding claims, **characterized in that** the substitute trajectory (ETR) is shorter than the strongly curved section (TA).

5. Method according to one of the preceding claims, **characterized in that** a maximum offset (DT) between the trained trajectory (TR) and the substitute trajectory (ETR) is smaller than a predefined limit value.

6. Method according to one of the preceding claims, **characterized in that** the substitute trajectory (ETR) comprises at least one travel direction change section (RWTA) whose curvature is smaller than the curvature of the substitute trajectory (ETR) at a section starting point (U1) of the travel direction change section (RWTA), preferably zero, preferably negative.

7. Method according to one of the preceding claims, **characterized in that** an opening angle between a first tangent to the substitute trajectory (ETR) at the section starting point (U1) of the respective travel direction change section (RWTA) of the number and a second tangent to the trained trajectory (TR) at a point corresponding to the section starting point (U1) is greater than or equal to a predefined limit value.

8. Method according to one of the preceding claims, **characterized in that** the substitute trajectory (ETR) contains a travel direction change section (RWTA) in each case after a predefined distance along the substitute trajectory (ETR).

9. Method according to one of the preceding claims, **characterized in that** the substitute trajectory (ETR) has a negative curvature with respect to the strongly curved section (TA) in a starting portion (NTA1), which directly follows the substitute starting point (EA), and/or in an end portion (NTA2) which directly follows the substitute end point (EE).

10. Method according to one of the preceding claims, **characterized in that** the substitute starting point (EA), the substitute end point (EE) and the substitute trajectory (ETR) are ascertained by means of an iterative optimization method, wherein environmental sensor data which are provided by environmental sensors (120, 130) of the vehicle (100) and/or by external environmental sensors are taken into account in the ascertainment.

11. Method according to one of the preceding claims, **characterized in that** the vehicle (100) is localized at a localization position on the trained trajectory (TR) which is in front of the starting point (A) of the strongly curved section (TA).

12. Method according to one of the preceding claims, **characterized in that** the maximum permissible steering angle predefined in the following mode is different for left and right.

13. Computer program product comprising instructions that, when the program is executed by a computer, cause said computer to perform the method according to one of Claims 1 - 12.

14. Parking assistance system (110) for a vehicle (100) which is configured, in a following mode, to drive the vehicle (100) along a trained trajectory (TR) or to initiate driving, the parking assistance system (110) comprising:
a computing unit (111) for receiving the trained trajectory (TR) which is a trajectory navigated manually during a training mode, wherein the trained trajectory (TR) comprises at least one strongly curved section (TA), the radius of curvature (R1, R2) of which is smaller than can be achieved with the vehicle (100) with a maximum permissible steering lock predefined in the following mode,
a determination unit (112) for determining a starting point (A) and an end point (E) of the strongly curved section (TA) in the trained trajectory (TR), and
an ascertainment unit (113) for ascertaining a substitute trajectory (ETR) which connects a substitute starting point (EA) to a substitute end point (EE), wherein
the substitute starting point (EA) and the substitute end point (EE) are each on the trained trajectory (TR) and the strongly curved section (TA) is between the substitute starting point (EA) and the substitute end point (EE), and
a maximum curvature of the substitute trajectory (ETR) has a radius of curvature (R1, R2) that can be achieved with the maximum permissible steering lock predefined in the following mode or with a smaller steering lock.

15. Vehicle (100) having a parking assistance system (110) according to Claim 14.

## Revendications

1. Procédé pour faire fonctionner un véhicule (100) au moyen d'un système d'aide au stationnement (110) qui est conçu pour, dans un mode de suivi, faire rouler le véhicule (100) le long d'une trajectoire apprise (TR) ou pour déclencher la conduite, le procédé comprenant :
a) le fait (S1) d'obtenir la trajectoire apprise (TR), qui dans un mode d'apprentissage dans lequel une trajectoire conduite manuellement est enregistrée en tant que trajectoire apprise (TR), la trajectoire apprise (TR) comprenant au moins une sous-section (TA) fortement courbée dont le rayon de courbure (R1, R2) est inférieur au rayon atteignable par le véhicule (100) avec un angle de braquage maximal admissible prédéfini dans le mode de suivi,
b) le fait (S2) de déterminer un point de début (A) et un point de fin (E) de la sous-section (TA) fortement courbée dans la trajectoire apprise (TR),
c) le fait (S3) de déterminer une trajectoire de substitution (ETR) qui relie un point (EA) de début de substitution à un point (EE) de fin de substitution,
le point (EA) de début de substitution et le point (EE) de fin de substitution se trouvant respectivement sur la trajectoire apprise (TR), et la sous-section (TA) fortement courbée se trouvant entre le point (EA) de début de substitution et le point (EE) de fin de substitution, et
une courbure maximale de la trajectoire de substitution (ETR) présentant un rayon de courbure (R1, R2) qui est atteignable avec le braquage maximal admissible prédéfini en mode suivi ou avec un braquage inférieur.

2. Procédé selon la revendication 1, **caractérisé en ce que** la trajectoire de substitution (ETR) s'étend au moins partiellement à l'intérieur de la sous-section (TA) fortement courbée et/ou **en ce que** la trajectoire de substitution (ETR) présente une sous-section dont la courbure est négative par rapport à la courbure de la sous-section (TA) fortement courbée, et/ou **en ce que** la trajectoire de substitution (ETR) comprend un certain nombre de sous-sections (RWTA) de changement de direction.

3. Procédé selon la revendication 1 ou la revendication 2, **caractérisé en ce que** le point (EA) de début de substitution se trouve, par rapport à une direction de déplacement (DIR) du véhicule (100), avant le point de début (A) de la sous-section (TA) fortement courbée sur la trajectoire apprise (TR) et/ou **en ce que** le point (EA) de fin de substitution se trouve, par rapport à la direction de déplacement (DIR) du véhicule (100), après le point de fin (E) de la sous-section (TA) fortement courbée sur la trajectoire apprise (TR).

4. Procédé selon l'une des revendications précédentes, **caractérisé en ce que** la trajectoire de substitution (ETR) est plus courte que la sous-section (TA) fortement courbée.

5. Procédé selon l'une des revendications précédentes, **caractérisé en ce qu'**un décalage maximal (DT) entre la trajectoire apprise (TR) et la trajectoire de substitution (ETR) est inférieur à une valeur limite prédéfinie.

6. Procédé selon l'une des revendications précédentes, **caractérisé en ce que** la trajectoire de substitution (ETR) comprend au moins une sous-section (RWTA) de changement de direction dont la courbure est inférieure à la courbure de la trajectoire de substitution (ETR) en un point de début (U1) de la sous-section (RWTA) de changement de direction, de préférence nulle, de préférence négative.

7. Procédé selon l'une des revendications précédentes, **caractérisé en ce qu'**un angle d'ouverture entre une première tangente à la trajectoire de substitution (ETR) au point de début (U1) de la sous-section (RWTA) de changement de direction concernée parmi le nombre, et une deuxième tangente à la trajectoire apprise (TR) en un point correspondant au point de début (U1) de la sous-section est supérieur ou égal à une valeur limite prédéfinie.

8. Procédé selon l'une des revendications précédentes, **caractérisé en ce que** la trajectoire de substitution (ETR) comprend une sous-section (RWTA) de changement de direction après chaque trajet prédéfini le long de la trajectoire de substitution (ETR).

9. Procédé selon l'une des revendications précédentes, **caractérisé en ce que** la trajectoire de substitution (ETR) présente, dans une section de début (NTA1) qui suit directement le point (EA) de début de substitution et/ou dans une section de fin (NTA2) qui suit directement le point (EE) de fin de substitution, une courbure négative par rapport à la sous-section (TA) fortement courbée.

10. Procédé selon l'une des revendications précédentes, **caractérisé en ce que** le point (EA) de début de substitution, le point (EE) de fin de substitution et la trajectoire de substitution (ETR) sont déterminés par un procédé d'optimisation itératif, des données de capteurs d'environnement, fournies par des capteurs d'environnement (120, 130) du véhicule (100) et/ou par des capteurs d'environnement externes, étant prises en compte lors de la détermination.

11. Procédé selon l'une des revendications précédentes, **caractérisé en ce qu'**une localisation du véhicule (100) est effectuée en une position de localisation sur la trajectoire apprise (TR) qui se trouve avant le point de début (A) de la sous-section (TA) fortement courbée.

12. Procédé selon l'une des revendications précédentes, **caractérisé en ce que** l'angle de braquage maximal admissible prédéfini en mode suivi est différent pour la gauche et pour la droite.

13. Produit de programme d'ordinateur, comprenant des instructions qui, lors de l'exécution du programme par un ordinateur, amènent celui-ci à mettre en œuvre le procédé selon l'une des revendications 1 à 12.

14. Système d'aide au stationnement (110) pour un véhicule (100) qui est conçu pour conduire le véhicule (100) dans un mode de suivi le long d'une trajectoire apprise (TR) ou pour déclencher la conduite, le système d'aide au stationnement (110) comprenant :
une unité de calcul (111), pour obtenir la trajectoire apprise (TR), qui est une trajectoire parcourue manuellement pendant un mode d'apprentissage, la trajectoire apprise (TR) comprenant au moins une sous-section (TA) fortement courbée dont le rayon de courbure (R1, R2) est inférieur à celui qui est atteignable par le véhicule (100) avec un angle de braquage maximal admissible prédéfini dans le mode de suivi,
une unité de détermination (112), pour déterminer un point de début (A) et un point de fin (E) de la sous-section (TA) fortement courbée dans la trajectoire apprise (TR), et
une unité de détermination (113), pour déterminer une trajectoire de substitution (ETR) qui relie un point (EA) de début de substitution à un point (EE) de fin de substitution,
le point (EA) de début de substitution et le point (EE) de fin de substitution se trouvant respectivement sur la trajectoire apprise (TR), et la sous-section (TA) fortement courbée se trouvant entre le point (EA) de début de substitution et le point (EE) de fin de substitution, et
une courbure maximale de la trajectoire de substitution (ETR) présentant un rayon de courbure (R1, R2) qui est atteignable avec le braquage maximal admissible prédéfini en mode suivi ou avec un braquage inférieur.

15. Véhicule (100) comprenant un système d'aide au stationnement (110) selon la revendication 14.
